## Europäisches Patentamt

## European Patent Office

## Office européen des brevets

(11) Veröffentlichungsnummer: **0 215 387 B1**

# EUROPÄISCHE PATENTSCHRIFT

(45) Veröffentlichungstag der Patentschrift:
**18.04.90**

(51) Int. Cl.⁴: **A01G 3/06**

(21) Anmeldenummer: **86112246.3**

(22) Anmeldetag: **04.09.86**

(54) Handgrasschere.

(30) Priorität: **06.09.85 DE 3531881**
**06.09.85 DE 3531882**

(73) Patentinhaber: **Wolf-Geräte GmbH,
Gregor-Wolf-Strasse 16 Postfach 860 und 880,
D-5240 Betzdorf/Sieg(DE)**

(43) Veröffentlichungstag der Anmeldung:
**25.03.87 Patentblatt 87/13**

(72) Erfinder: **Orthey, Gebhard, Raiffeisenstrasse 10,
D-5241 Nauroth(DE)**

(45) Bekanntmachung des Hinweises auf die Patenterteilung:
**18.04.90 Patentblatt 90/16**

(74) Vertreter: **Koch, Günther, Dipl.-Ing. et al, Postfach 920,
D-8000 München 33(DE)**

(84) Benannte Vertragsstaaten:
**AT BE CH DE FR GB IT LI LU NL SE**

(56) Entgegenhaltungen:
**DE-B- 1 212 342**
**US-A- 3 325 896**

## Beschreibung

Die Erfindung bezieht sich auf eine Handgrasschere der im Oberbegriff des Patentanspruchs 1 angegebenen Gattung. Derartige Scheren werden vorwiegend zum Schneiden überstehender Rasenkanten oder zum Schneiden solcher Flächen benutzt, die dem Rasenmäher nicht zugänglich sind. Hierbei kann durch Verdrehen der Scherenblätter gegenüber den Handgriffen die jeweils ergometrisch günstigste Drehstellung eingestellt werden. Eine gattungsgemäße Handgrasschere ist aus der DE-B 1 212 342 bekannt. Bei dieser bekannten Handgrasschere erfordert der Zusammenbau der Drehgelenke einen erheblichen manuellen Aufwand. Außerdem besteht die Gefahr einer Verschmutzung der freiliegenden Gelenke.

Der Erfindung liegt die Aufgabe zugrunde, eine gattungsgemäße Handgrasschere derart zu verbessern, daß die Herstellung durch Vereinfachung der Einzelteile und des Zusammenbaus dieser Einzelteile verbilligt wird, wobei eine kompakte und bequem zu handhabende Schere geschaffen wird, die funktionell alle zu erwartenden Ansprüche erfüllt und die Gefahr von Verletzungen weitgehend ausschließt.

Gelöst wird die gestellte Aufgabe durch die im Kennzeichnungsteil des Patentanspruchs 1 angegebenen Merkmale.

Der Drehkopf aus Kunststoff überdeckt und schützt alle Getriebeteile des Scherenmechanismus und verringert die Gefahr, daß bei der Betätigung ein Finger im Übertragungsmechanismus eingeklemmt wird.

Es ist zwar aus der US-A 3 325 896 bereits eine Handgrasschere bekannt, bei der der Obergriff ein nach vorn und unten vorstehendes Teil aufweist, das das Scherengelenk trägt und umschließt. Bei dieser bekannten Handgrasschere ist jedoch kein Drehgelenk vorhanden, durch welches die Schneidebene gegenüber den Handgriffen verändert werden kann.

Ausgestaltungen der Drehrasten und Drehanschläge ergeben sich aus den Unteransprüchen 2 und 3.

Durch die Merkmale der Ansprüche 4 und 5 wird die Montage und Nachstellung erleichtert, weil mit wenigen Drehungen mittels eines Schraubendrehers die Scherenendstellung justiert werden kann, die für einen sauberen Schnitt entscheidend ist.

Die Kunststoffausführung des Drehgelenks und des von ihm getragenen Scherengelenks ermöglicht eine leichtgängige weiche Schwenkbewegung, wobei das Drehgelenk sicher in unterschiedlichen Raststellungen eingerastet werden kann. Insbesondere ist vorgesehen, die Scherenblätter von einer Mittelstellung aus nach beiden Seiten hin um je 90° zu verschwenken, und zwar in Schritten von jeweils 22,5°.

Der Vorteil der Drehkopfkonstruktion liegt in der Integration von verschiedenen Funktionen, die im nachfolgenden aufgeführt werden:

– Leichte Montage durch Einrastung an den Obergriff, Ausnutzung der Kunststoffelastizität.

– Drehrastung im Bereich 0° bis 180° alle 22,5°, Ausnutzung der Kunststoffelastizität.

– Anschlag 0° und 180° gleichzeitiger Ausgleich der Flügeltoleranzen durch federnde Ausbildung des Anschlages im Obergriff in Längsrichtung.

– Drehgelenk für Obermesser, Paarung, Kunststoff, Kunststoff in einem Ausschraubtubus integriert.

– Aufnahme des unteren Scherenblattes durch Verschrauben und gleichzeitige Stabilisierung des Drehkopfes durch das untere Scherenblatt.

– Abdeckung der Gesamtmechanik Drehgelenk, Zugstange, Gleitbuchse und Befestigung. Auf den Drehkopf oben ist eine Griffriffelung mit Richtungspfeilen zum Verstellen angebracht.

Nachstehend wird ein Ausführungsbeispiel der Erfindung anhand der Zeichnung beschrieben. In der Zeichnung zeigen:

Fig. 1 eine Schnittansicht einer Handgrasschere mit Drehgelenk zur Veränderung der Scherenblattanstellung, im geschlossenen Zustand;

Fig. 2 die in Fig. 1 dargestellte Handgrasschere im entriegelten geöffneten Zustand.

Die Handgrasschere weist einen aus Kunststoff geformten Obergriff (10) und einen gegenüber diesem über ein Schwenkgelenk (12) verschwenkbaren Untergriff (14) auf, der über einen einstückig angeformten bügelartigen Unterzug (16) zu einem geschlossenen Ring ergänzt ist. Auch der Untergriff besteht aus Kunststoff, und er wird im vorderen Bereich des Schwenkgelenkes (12) von dem schalenartig ausgebildeten, nach unten weisenden Fortsatz (18) des Obergriffs (10) umschlossen und durch einen Schieber (24) am Obergriff (10) in Scherenschließstellung festgelegt.

Der Obergriff weist an seinem vorderen oberen Stirnende einen Schlitz (20) auf, durch den der untere Schenkel (22) des im Schnitt U-förmigen Schiebers (24) in das Innere des schalenförmigen Griffs einschiebbar ist. Der obere Schenkel (26) des Schiebers (24) läuft auf der etwas zurückversetzten, vorderen Oberseite des Obergriffs (10), so daß seine zweckmäßigerweise geriffelte Oberfläche bedienungsgünstig mit dem Daumen der die Handgriffe umschließenden Hand vor- und zurückgeschoben werden kann. Seitlich und vorn ist der Schieber (24) schalenförmig derart heruntergezogen, daß er seitlich und vorn mit den Oberflächen des Obergriffs (10) fluchtet.

Das Schwenkgelenk (12) weist eine Gelenkbuchse (28) auf, die in miteinander fluchtende Löcher in den Seitenwänden des Untergriffs (14) eingesetzt ist. Mit der Gelenkbuchse (28) fluchtende Löcher der Seitenwände des Obergriffs (10) sind von einem durch die Gelenkbuchse (28) geführten Knebelkerbstift (30) durchsetzt, der die Schwenkverbindung der beiden Griffe (10, 14) gewährleistet.

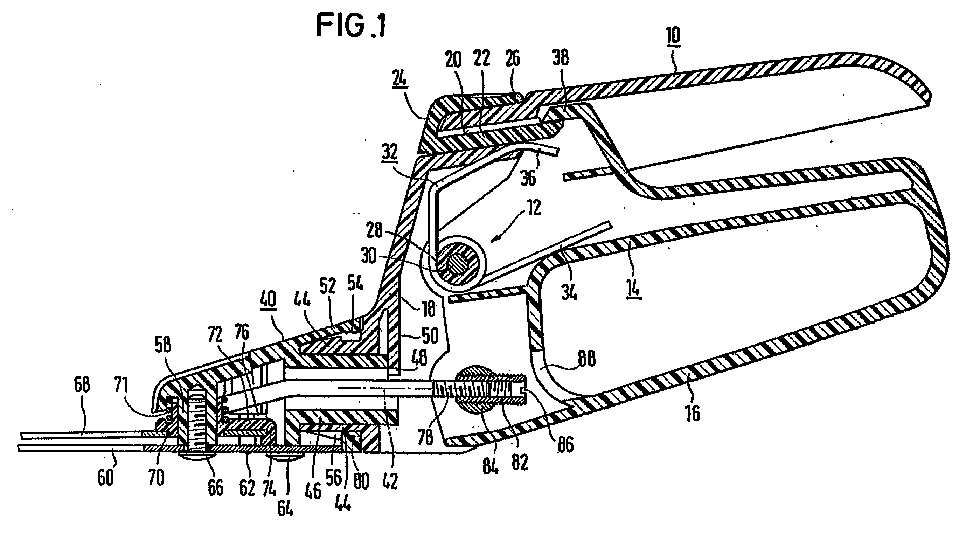

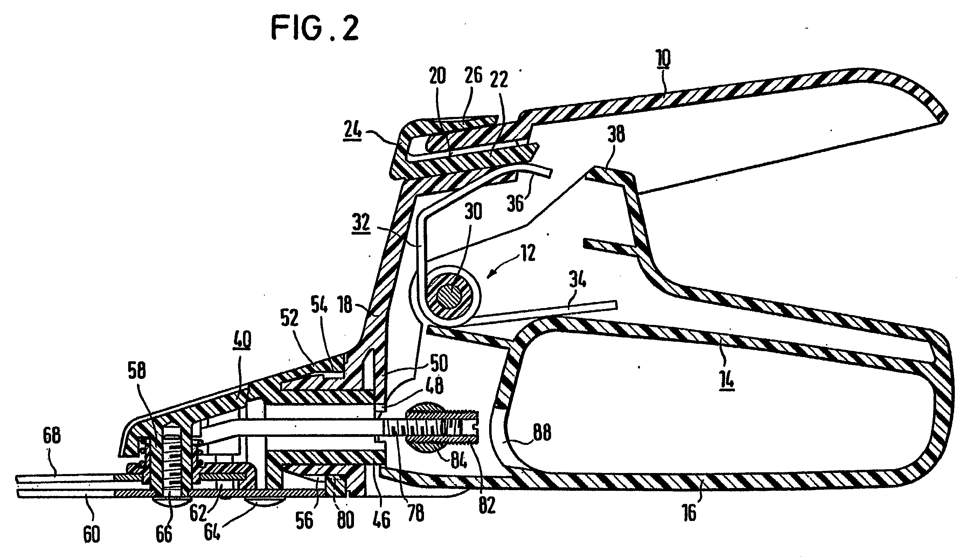

Zwischen den Seitenwänden des Untergriffs (14) ist eine Schenkelfeder (32) vorgesehen, die die Aufgabe hat, den Untergriff (14) von dem Obergriff (10) abzuspreizen. Diese als Drahtfeder ausgebildete Schenkelfeder (32) ist in ihrem Mittelabschnitt ringförmig aufgewickelt und auf die Gelenkbuchse (28) aufgezogen. Ihr Unterschenkel (34) stützt sich auf der Innenseite des Untergriffs (14) ab, und ihr oberer, leicht angewinkelter Schenkel (36) ist gegen den unteren Schenkel (22) des Schiebers (24) abgestützt und wirkt über diesen auf den Obergriff (10). Durch die Federkraft wird der Schieber (24) in seiner Führung vorgespannt, und zwischen Schieber (24) und Obergriff (10) sind an beliebigen Stellen Rastnocken bzw. Rastvertiefungen vorgesehen, die die beiden Schaltstellungen des Schiebers sichern, die aus Fig. 1 bzw. 2 hervorgehen. Diese beiden Schaltstellungen werden durch die Schenkelfeder (32) fixiert. In zurückgeschobener Stellung gemäß Fig. 1 wird der Untergriff (14) durch den unteren Schenkel (22) des Schiebers (24) gehalten, der hinter einen Ansatz (38) des Untergriffs (14) greift und diesen am Obergriff (10) festhält. In der vorgeschobenen Stellung gemäß Fig. 2 gibt der Schieber (24) diesen Ansatz (38) frei und der Untergriff (14) kann sich unter der Wirkung der Schenkelfeder (32) abspreizen und die Schere öffnen.

Ein Drehkopf (40) aus Kunststoff trägt die Scherenblätter und ist gegenüber den Griffen um eine Achse (42) schwenkbar, die parallel zur Schnittebene der Scherenblätter verläuft und die Gelenkachse des Schwenkgelenkes (12) des Handgriffs senkrecht kreuzt.

Zur Lagerung des Drehkopfes (40) weist der Obergriffortsatz (18) an der vorderen unteren Stirnseite eine angeformte Drehgelenkbüchse (44) auf, in die eine im Inneren des Drehkopfes (40) angeformte Hülse (46) einsteht. An ihrem gemäß Fig. 1 und 2 rechten Ende ist die Hülse (46) mit einer über 180° verlaufenden Stufe (48) versehen, in die ein Anschlag (50) des Obergriff-Fortsatzes (18) einsteht, der die Schwenkbewegung aus der in Fig. 1 und 2 dargestellten Stellung in beiden Drehrichtungen auf je 90° begrenzt.

Der Drehkopf (40) umschließt die Drehgelenkbüchse (44) mit einer schalenförmigen Abdeckung (52), die mit einer Griffriffelung versehen ist.

Im Inneren der Abdeckung (52) greift eine nach innen vorstehende Raste (54) hinter einen radial von der Drehgelenkbüchse (44) nach außen vorstehenden Vorsprung (56), wodurch der Drehkopf (40) gegen Abnahme von der Drehgelenkbüchse (44) gesichert ist. Die Montage kann einfach dadurch erfolgen, daß der Drehkopf mit seiner Hülse (46) in die Drehgelenkbüchse (44) eingeschoben wird und dabei mit der Abdeckung die Rastverbindung herstellt, wobei der Kunststoff elastisch zurückweicht und das Aufschieben ermöglicht, infolge der danach aufeinander liegenden Rastflächen ein Abziehen jedoch verhindert.

Im Vorderteil des schalenförmigen Drehkopfes (40) ist innen eine Lagerbuchse (58) angeformt, deren Achse senkrecht zur Schneidebene der Scherenblätter verläuft.

Das feststehende untere Scherenblatt (60) ist mit einem Steckkerbstift (62) und mittels Schrauben (64 bzw. 66) an der Unterseite des Drehkopfes (40) festgelegt. Dabei ist die Schraube (66) in das Scherengelenk bildende Lagerbuchse (58) eingeschraubt.

Das bewegliche obere Scherenblatt (68) ist mittels einer in ein Loch des Scherenblattes eingesetzten Gleitbuchse (70) auf der Lagerbuchse (58) schwenkbar gelagert. Diese Gleitbuchse (70) aus Kunststoff ist einstückig mit einem über dem hinteren Teil des Scherenblattes liegenden Lagerflansch (72) verbunden, der mit einem den hinteren Rand des Messers umgreifenden Abschnitt (74) versehen ist. Der Lagerflansch (72) läuft an der Unterseite des Drehkopfes ab, wobei durch die Berührung der Kunststoffflächen ein leichtes Gleiten gewährleistet ist. Die Scherenblattbewegung nach außen wird durch einen Anschlag (76) begrenzt, der vom Flansch (72) nach oben vorsteht und mit Gegenanschlägen im Inneren des Drehkopfes zusammenwirkt.

Auf die Lagerbuchse (58) ist eine Druckschraubenfeder (71) aufgesetzt, die das obere Scherenblatt (68) gegen das untere Scherenblatt (60) vorspannt. Die jeweilige Drehstellung des Drehkopfes (40) gegenüber dem Obergriffortsatz (18) kann durch Drehrasten (80) zwischen Drehkopf (40) und Drehgelenkbüchse (44) fixiert werden, wobei diese Rasten vorzugsweise im Winkelabstand von 22,5° angeordnet sind.

Das vordere abgekröpfte Ende einer durch die Hülse (46) geführten Zugstange (78) ist in einem Loch des oberen Scherenblattes seitlich zum Scherengelenk verankert.

Das hintere Ende der Zugstange (78) ist in eine Stellhülse (82) eingeschraubt. Diese Stellhülse (82) ist mit einem Außengewinde in ein querverlaufendes Gewindeloch eines Stellbolzens (84) eingeschraubt, der in die beiden Seitenwände des Untergriffs (14) zwischen diesen verlaufend eingesetzt ist. Die Stellhülse (82) weist im hinteren Abschnitt Querschlitze (86) oder Schlüsselansätze auf, so daß sie mittels eines Werkzeugs gedreht werden kann, um die Schließstellung der Scherenblätter fixieren zu können. Das Werkzeug kann dabei durch ein Loch (88) des Untergriffs eingeführt werden.

Um zu gewährleisten, daß mit einer nur relativ geringen Winkeldrehung der Stellhülse (82) auch relativ große Toleranzen überbrückt werden können, ist außer der Gewindeverbindung zwischen Stellhülse und Stellbolzen eine weitere Gewindeverbindung zwischen Stellhülse (Innengewinde) und Zugstange (78) (Außengewinde) vorgesehen. Diese Gewinde sind als Differentialgewinde ausgebildet, wobei die Stellhülse innen beispielsweise ein Rechtsgewinde M5(p=0,8mm) und außen ein Linksgewinde M8×1(p=1mm) aufweist.

Durch Vorschieben des Schiebers (24) wird die Schere entriegelt, und sie geht unter der Wirkung der Schenkelfeder (32) in die aus Fig. 2 ersichtliche Öffnungsstellung über. Durch Betätigen des Untergriffs (14) wird über die Zugstange (78) das obere Scherenblatt (68) gegenüber dem unteren Scherenblatt (60) bewegt, und hierdurch kommt eine Schneidbewegung zustande.

Sowohl im geschlossenen und verriegelten Zustand gemäß Fig. 1 als auch im geöffneten Zustand gemäß Fig. 2 kann der Drehkopf (40) gegenüber den Handgriffen verdreht werden, so daß die ergonometrisch günstigste Handhabung der Schere für jeden Anwendungsfall einstellbar ist.

## Patentansprüche

1. Handgrasschere,
mit einem feststehenden Obergriff (10),
der aus Kunststoff besteht,
mit einem Untergriff (14),
der aus Kunststoff besteht und
gegenüber dem Obergriff (10) über ein Gelenk (28, 30) schwenkbeweglich ist,
mit einem zwischen einem Obergrifffortsatz (18) und den Scherenblättern (60, 68) angeordneten Drehgelenk,
das eine Hülse (46) aufweist,
die von einer Drehgelenkbüchse (44) des Obergrifffortsatzes (18) geführt ist,
das untere Scherenblatt (60) trägt,
und von einer Zugstange (78) durchsetzt ist, die den beweglichen Untergriff (14) mit dem beweglichen oberen Scherenblatt (68) antriebsmäßig kuppelt, das vom unteren Scherenblatt (60) über ein Scherengelenk getragen ist,
dadurch gekennzeichnet, daß
ein Drehkopf (40) aus Kunststoff vorgesehen ist,
der einstückig mit der Hülse (46) geformt ist,
der die an den Obergrifffortsatz (18) angeformte Drehgelenkbüchse (44) umschließt, in die die Hülse (46) eingeschoben ist und
der eine eine Befestigungsschraube (66) für das untere Scherenblatt (60) tragende Lagerbuchse (58) des Scherengelenks bildet, auf der eine das obere Scherenblatt (68) tragende Gleitbuchse (70) drehbar ist, die nach hinten zu einem Lagerflansch (72) verlängert ist, der mit seinem Abschnitt (74) den Hinterteil des oberen Scherenblatts (68) umgreift und auf der Unterseite des Drehkopfes (40) abläuft,
und der eine radial nach innen vorstehende ringförmige Raste (54) aufweist,
die axial hinter einen nach außen weisenden ringförmigen Vorsprung (56) der Drehgelenkbüchse (44) einrastet und den Drehkopf (40) gegen axiales Abziehen sichert.

2. Handgrasschere nach Anspruch 1, dadurch gekennzeichnet, daß zwischen dem Drehkopf (40) und der Drehgelenkbüchse (44) des Obergrifffortsatzes (18) in Winkelabständen Drehrasten (80) angeordnet sind.

3. Handgrasschere nach Anspruch 1, dadurch gekennzeichnet, daß ein Drehanschlag (50) des Obergrifffortsatzes (18) in eine sich über 180° erstreckende Stufe (48) der Hülse (46) des Drehkopfes (40) eingreift und dessen Schwenkbewegung auf insgesamt 180° begrenzt.

4. Handgrasschere nach Anspruch 1, dadurch gekennzeichnet, daß das hintere Ende der Zugstange (78) in einer Stellhülse (82) verankert ist, die in einem Stellbolzen (84) geführt ist, der zwischen den Seitenenden des Untergriffs (14) angeordnet ist, und daß die Stellhülse (82) mit einem Außengewinde in ein Gewindeloch des Stellbolzens (84) eingeschraubt ist, während die Zugstange (78) mit einem Außengewinde in ein Innengewinde der Stellhülse (82) eingeschraubt ist, wobei die beiden Gewinde als Differentialgewinde ausgebildet sind.

5. Handgrasschere nach Anspruch 4, dadurch gekennzeichnet, daß der Untergriff (14) benachbart zur Stellhülse (82) ein Loch (88) zum Einsatz eines Werkzeuges aufweist.

## Claims

1. Manual grass shears comprising a stationary upper handle (10) consisting of plastics material, a lower handle (14) consisting of plastics material and which can be swivelled with respect to the upper handle (10) by means of a joint (28, 30), a swivel joint arranged between an upper handle extension (18) and the shear blade (60, 68) and including a sleeve (46) which is guided by a swivel joint bushing (44) of the upper handle extension (18), which sleeve carries the lower shear blade (60) and has passing through it a tie rod (78) which drivingly couples the movable lower handle (14) to the movable upper shear blade (68), the latter being carried by the lower shear blade (60) via a shear joint, characterized in that a swivel head (40) of plastics material is provided which is formed in one piece with the sleeve (46), which swivel head encloses the swivel joint bushing (44) formed on the upper handle extension (18), into which bushing (44) the sleeve (46) is inserted, and which swivel head (40) forms a shear joint bearing bush (58) carrying a fastening screw (66) for the lower shear blade (60), on which bearing bush (58) a sliding bushing (70) carrying the upper shear blade (68) can be swivelled, said sliding bushing (70) being extended rearwardly into a bearing flange (72) which grips the rear part of the upper shear blade (68) with its portion (74) and finishes at the bottom of the swivel head (40), and which swivel head (40) comprises an annular lock (54) projecting radially inwardly, said lock (54) engaging axially behind an outwardly directed annular projection (56) of the swivel joint bushing (44) and securing the swivel head (40) against axial removal.

2. Manual grass shears according to claim 1, characterized in that angularly spaced swivel locks (80) are arranged between the swivel head (40) and the swivel joint bushing (44) of the upper handle extension (18).

3. Manual grass shears according to claim 1, characterized in that a swivel limit stop (50) on the upper handle extension (18) engages in a step (48) extending over 180° of the sleeve (46) of the swivel head (40), restricting the swivel movement thereof to 180° altogether.

4. Manual grass shears according to claim 1, characterized in that the rear end of the tie rod (78) is anchored in an adjusting sleeve (82) which is guided in an adjusting bolt (84) arranged between the side ends of the lower handle (14), and in that the adjusting sleeve (82) is screwed with an external thread into a tapped hole in the adjusting bolt (84), while the tie rod (78) is screwed with an external thread into an internal thread in the adjusting sleeve (82), the two threads being constructed as differential threads.

5. Manual grass shears according to claim 4, characterized in that lower handle (14) comprises a hole (88) for insertion of a tool adjacent the adjusting sleeve (82).

## Revendications

1. Cisaille à gazon à actionnement manuel, comportant une poignée supérieure fixe (10), qui est faite de matière synthétique, une poignée inférieure (14), qui est faite de matière synthétique et qui peut pivoter par rapport à la poignée supérieure (10) par le jeu d'une articulation (28, 30),
une articulation de rotation qui est prévue entre un prolongement (18) de la poignée supérieure et les lames (60, 68), de la cisaille,
articulation qui comporte un manchon (46), qui est guidé dans une douille d'articulation de rotation (44) formée sur le prolongement (18) de la poignée supérieure, le manchon (46) portant la lame inférieure (60) de la cisaille
et étant traversé par une barre de traction (78) qui accouple pour la commande la poignée inférieure mobile (14) à la lame supérieure mobile (68) de la cisaille,
qui est portée par la lame inférieure (60) de la cisaille par l'intermédiaire d'une articulation de cisaille,
caractérisée en ce qu'elle comporte une tête tournante (40), en matière synthétique, qui est venue de moulage avec le manchon (46),
tête tournante (40) qui couvre la douille d'articulation de rotation (44) venue de moulage avec le prolongement (18) de la poignée supérieure dans laquelle est glissé le manchon (46) et
qui forme un manchon de montage (58) de l'articulation de la cisaille portant une vis de fixation (66) pour la lame inférieure (60) de la cisaille, manchon (58) sur lequel peut tourner un manchon de glissement (70) portant la lame supérieure (68) de la cisaille, manchon (70) qui est prolongé vers l'arrière pour former une patte de montage (72) entourant par sa partie (74) la partie postérieure de la lame supérieure (68) de la cisaille et passant à la face inférieure de la tête tournante (40), la tête tournante (40)
portant un arrêt annulaire (54) s'avançant radialement vers l'intérieur qui s'accroche axialement à l'arrière d'une saillie (56) de la douille (44) de l'articulation de rotation et assure la tête tournante (40) contre tout retrait dans le sens axial.

2. Cisaille à gazon à actionnement manuel suivant la revendication 1, caractérisée en ce qu'entre la tête tournante (40) et la douille d'articulation de rotation (44) formée sur le prolongement (18) de la poignée supérieure, il est prévu des arrêts de rotation (80) se trouvant à distance angulaire l'un de l'autre.

3. Cisaille à gazon à actionnement manuel suivant la revendication 1, caractérisée en ce qu'une butée de rotation (50) dont est muni le prolongement (18) de la poignée supérieure s'engage dans un degré (48), s'étendant sur 180°C, du manchon (46) de la tête tournante (40) et limite à 180° au total le mouvement de rotation de celle-ci.

4. Cisaille à gazon à actionnement manuel suivant la revendication 1, caractérisée en ce que l'extrémité postérieure de la barre de traction (78) est fixée dans un manchon de réglage (82) qui est guidé dans un boulon de réglage (84) monté entre les extrémités des côtés de la poignée inférieure (14), et en ce que le manchon de réglage (82) est vissé par un filet externe dans un trou taraudé de boulon de réglage (84), alors que la barre de traction (78) est vissée par un filet externe dans un filet interne du manchon de réglage (82), les deux filets se présentant sous la forme de filets différentiels.

5. Cisaille à gazon à actionnement manuel suivant la revendication 4, caractérisée en ce que la poignée inférieure (14) présente, au voisinage du manchon de réglage (82), un trou (88) destiné à permettre l'utilisation d'un outil.

FIG.1

FIG. 2